# EUROPÄISCHE PATENTANMELDUNG

(11) **EP 0 886 132 A2**
(43) Veröffentlichungstag der Anmeldung: **23.12.1998**
(21) Anmeldenummer: 98107791.0
(22) Anmeldetag: 29.04.1998
(51) Int. Cl.: G01J 5/62

(54) **Verfahren und Vorrichtung zur digitalen Erfassung der Messdaten von Strahlungsdetektoren**

(30) Priorität: 22.06.1997 DE 19726228
(71) Anmelder: Optrotherm Mess- und Sensortechnik GmbH, 65936 Frankfurt (DE)
(72) Erfinder: Scheuer, Wolfgang, 65933 Frankfurt (DE)
(74) Vertreter: Weber, Dieter, Dr.

(57) **Zusammenfassung**

Die vorliegende Erfindung betrifft ein Verfahren und eine Vorrichtung zur digitalen Erfassung der Meßdaten von Strahlungsdetektoren, bei welchem ein Strahlungsdetektor intermittierend einer Bestrahlung ausgesetzt wird und ein entsprechendes, intermittierendes, elektrisches Signal abgibt, welches einen hohen Gleichspannungsanteil enthält und stark verrauscht ist. Die entsprechende Vorrichtung hat einen Detektor (1), einen Chopper (2), einen A/D-Wandler (3) und einen Mikroprozessor (6),. Um ein Verfahren und eine Vorrichtung dahingehend zu verbessern, daß sie vereinfacht und preiswerter durchführbar werden, wobei es außerdem von Vorteil wäre, wenn die Meßdaten nahezu in Echtzeit zur Verfügung stünden, um sie beispielsweise für eine Prozeßsteuerung oder Regelung verwenden zu können, wird hinsichtlich des Verfahrens erfindungsgemäß vorgeschlagen, daß der von dem Detektor abgegebene Wechselspannungsanteil des Signals im wesentlichen unmittelbar oder allenfalls durch eine lineare Verstärkung modifiziert auf den Eingang eines integrierten und durch einen Mikroprozessor gesteuerten Analog-Digital-Wandlers (A/D-Wandlers) mit bipolarem Analogeingang gegeben wird, wobei Beginn, Dauer und Vorzeichen der Signalintegration des A/D-Wandlers von dem Mikroprozessor gesteuert werden. Hinsichtlich der Vorrichtung wird vorgeschlagen, daß der Detektorausgang (4) wechselspannungsmäßig direkt mit dem Eingang (5) des A/D-Wandlers (3) verbunden ist und daß der A/D-Wandler (3) ein integrierender, von dem Mikroprozessor (6) gesteuerter A/D-Wandler (3) mit einem bipolaren Analogeingang (5) ist.

## Beschreibung

Die vorliegende Erfindung betrifft ein Verfahren und eine Vorrichtung zur digitalen Erfassung der Meßdaten von Strahlungsdetektoren. Bei einem entsprechenden, bereits bekannten Verfahren wird ein Strahlungsdetektor intermittierend, und zwar vorzugsweise mit einer konstanten Wechselfrequenz, einer Bestrahlung ausgesetzt und gibt ein entsprechendes, intermittierendes, elektrisches Signal ab, welches zusätzlich zu diesem Wechselspannungssignal im allgemeinen starke Rauschanteile aufweist.

Eine bekannte Vorrichtung, welche ein solches Meßverfahren verwirklicht, weist einen sogenannten Chopper für die periodische Unterbrechung der Bestrahlung, einen Detektor, einen A/D-Wandler und einen Mikroprozessor auf.

Zusätzlich weisen die im Stand der Technik bekannten Vorrichtungen einen Wechselspannungsverstärker, einen Impulsformer und einen Phasenschieber auf.

Zur Identifizierung und Auswertung des Nutzsignales in Form einer Wechselspannung ist jedoch nach dem Stand der Technik zwischen dem Ausgang des Detektors und dem Eingang des A/D-Wandlers eine aufwendige Elektronik vorgesehen, mit welcher dieses relativ schwache, stark verrauschte und mit einem hohen Gleichspannungsuntergrund versehene Wechselspannungssignal verstärkt und phasenempfindlich gleichgerichtet wird, um das auf einem hohen Untergrund aufsitzende Wechselspannungssignal möglichst genau und mit großer Empfindlichkeit auswerten zu können. Erst der Ausgang des phasenempfindlichen Gleichrichters, der außerdem noch mit einem Tießpaßfilter versehen ist, wird auf den Eingang eines A/D-Wandlers gegeben, der dann dieses analoge Gleichspannungssignal digitalisiert. Dieses bekannte Verfahren und die entsprechende Vorrichtung sind relativ aufwendig und teuer. Außerdem arbeiten die bekannten Verfahren und Vorrichtungen relativ langsam, da bei der Verwendung von analogen, phasenabhängigen Gleichrichtern zunächst eine pulsierende Gleichspannung mit der doppelten Chopper-Frequenz entsteht, die vor der Weiterverarbeitung noch mit Tiefpaßfiltern geglättet werden muß. Dies verursacht lange Einschwingzeiten von vielen Signalperioden. Die analoge Signalverarbeitung und -verstärkung in mehreren Verstärkerstufen verursacht außerdem ein zusätzliches Rauschen und somit Meßungenauigkeiten.

Gegenüber diesem Stand der Technik liegt der vorliegenden Erfindung die Aufgabe zugrunde, ein Verfahren und eine Vorrichtung dahingehend zu verbessern, daß sie vereinfacht und preiswerter durchführbar werden, wobei es außerdem von Vorteil wäre, wenn die Meßdaten nahezu in Echtzeit zur Verfügung stünden, um sie beispielsweise für eine Prozeßsteuerung oder Regelung verwenden zu können.

Hinsichtlich des Verfahrens wird die der Erfindung zugrunde liegende Aufgabe dadurch gelöst, daß das von dem Detektor abgegebene Wechselsignal im wesentlichen unmittelbar, dh. einschließlich der Rauschanteile aber wahlweise auch verstärkt, auf den Eingang eines integrierenden, durch einen Mikroprozessor gesteuerten A/D-Wandlers mit bipolarem Analogengang gegeben wird, wobei die Integrationszeiten und der Zeitpunkt des Vorseichenwechsels der Integration des von dem A/D-Wandler zu integrierenden Signales von dem Mikroprozessor gesteuert werden.

Im Unterschied zum Stand der Technik ist also zwischen dem Ausgang des Detektors und dem Eingang des A/D-Wandlers keinerlei phasenabhängige Gleichrichtung oder irgendein Tiefpaßfilter vorgesehen. Vielmehr sind Ausgang des Detektors und Eingang des A/D-Wandlers im wesentlichen direkt miteinander verbunden. Dabei bedeutet "im wesentlichen direkt", daß allenfalls der Gleichspannungsanteil herausgefiltert wird, also ein Kopplungskondensator zwischen den Ausgang des Detektors und den Eingang des A/D-Wandlers geschaltet wird, wobei zusätzlich auch noch ein Strombegrenzungswiderstand in diese Verbindung integriert sein kann. Dadurch wird sichergestellt, daß nur der Wechselspannungsanteil des Detektorsignals zum Eingang des A/D-Wandlers gelangt und daß der Eingang des A/D-Wandlers nicht übersteuert wird. Der Kopplungskondensator wirkt als Hochpaßfilter, der aber im wesentlichen nur dazu dient, den, oftmals auch noch driftenden, Gleichspannungsanteil am Ausgang des Detektors und sehr niederfrequente Anteile herauszufiltern, ohne als spezifischer Bandpaß für die Chopper-Frequenz zu wirken. Die Chopper-Frequenz kann vielmehr noch den individuellen Wünschen und Bedingungen für das System angepaßt werden, ohne daß an der Verbindung zwischen Detektor und A/D-Wandler irgend etwas verändert oder eingestellt werden muß.

Zwischen dem Ausgang des Detektors und dem Eingang des A/D-Wandlers kann jedoch bei Bedarf auch noch ein Wechselspannungsverst ärker, z. B. ein handelsüblicher Operationsverstärker, geschaltet sein, insbesondere, wenn das Messignal relativ schwach ist.

Dabei ist es zweckmäßig, wenn der Mikroprozessor mit dem Unterbrecher bzw. Chopper synchronisiert wird, um so die steuerbaren Integrationszeiten und -phasen des A/D-Wandlers dem durch den Chopper hervorgerufenen Wechselsignal am Ausgang des Detektors anzupassen. Außerdem ist es sinnvoll und zweckmäßig, wenn der Mikroprozessor einen Schwingquarz aufweist bzw. mit einem Schwingquarz verbunden ist, der eine genaue und konstante Frequenz bzw. Zeitmessung liefert, um die Unterbrechungsfrequenz des Choppers konstant zu halten. In vielen Anwendungsfä llen ist der Chopper ein in offene und geschlossene Sektoren unterteiltes Rad, welches mit seiner Ebene in etwa senkrecht zu dem Strahlengang der zu messenden Strahlung ausgerichtet ist und sich durch diesen Strahl hindurch dreht, so daß der Strahl abwechselnd durch offene Sektoren hindurchfällt oder aber durch geschlossene Sektoren ausgeblendet wird. Dieser Chopper wird von einem Motor angetrieben, dessen Umdrehungsgeschwindigkeit mit Hilfe des Mikroprozessors und des Schwingquarzes gesteuert und vorzugsweise konstant gehalten wird. Die tatsächliche Unterbrechungsfrequenz kann dazu zum Beispiel durch eine Lichtschranke gemessen werden, wobei die Lichtschrankenunterbrechungsfrequenz ebenfalls von dem Mikroprozessor erfaßt wird, dem dadurch auch die echte Wechselspannungsfrequenz des am Eingang des A/D-Wandlers zu messenden Signals bekannt ist. Allerdings kann das Lichtschrankensignal gegen über dem Meßsignal phasenverschoben sein, so daß für die Steuerung des Einganges des A/D-Wandlers noch eine entsprechende Phasenverschiebung vorzusehen ist, die durch eine anfängliche Kalibrierungsmessung erfaßt und dann in dem Mikroprozessor fest einprogrammiert wird. Lediglich wenn sich die relative Anordnung des Lichtstrahles oder der Lichtschranke zu dem Chopperrad verändert, muß eine Nachkalibrierung erfolgen. Die Phasenverschiebung ist lediglich eine Verzögerungszeit für das Umschalten bzw. Umpolen des bipolaren Analogeinganges des A/D-Wandlers, damit dieser bei der Integration positive und negative Halbwellen des Signals betragsm äßig aufaddiert, ohne daß sich positive und negative Anteile des Signals bei der Integration ganz oder teilweise auslöschen.

Hinsichtlich der erfindungsgemäßen Vorrichtung wird die der Erfindung zugrunde liegende Aufgabe dadurch gelöst, daß der Detektorausgang wechselspannungsmäßig direkt mit dem Eingang des A/D-Wandlers verbunden ist, wobei der A/D-Wandler ein integrierender, von dem Mikroprozessor gesteuerter A/D-Wandler mit bipolarem Analogeingang ist. Wie bereits erwähnt, macht es die Verwendung eines A/D-Wandlers mit bipolarem Eingang und die Mikroprozessorsteuerung dieses A/D-Wandlers möglich, gezielt nur den Betrag eines Wechselspannungssignals mit der Chopper- bzw. Unterbrecherfrequenz zu integrieren, so daß bei dieser Integration Signale anderer Frequenz automatisch herausfallen. Hierdurch kann man auf eine aufwendige Vorverstärkung und phasenabh ängige Gleichrichtung verzichten. Der A/D-Wandler übernimmt praktisch die Funktion eines phasenabh ängigen Gleichrichters, indem seine Integrationszeiten und Vorzeichenwechsel von dem Mikroprozessor in Übereinstimmung mit der Unterbrecherfrequenz synchronisiert werden. In Reihe mit dem Ausgang des Detektors und dem Eingang des A/D-Wandlers sind erfindungsgem äß ein Koppelkondensator und ein Strombegrenzungswiderstand geschaltet, so daß nur der Wechselspannungsanteil des Detektorsignals über den Kondensator an den Eingang des A/D-Wandlers gelangt und der Eingangswiderstand eine Übersteuerung des Einganges des A/D-Wandlers verhindert. Als Unterbrecher ist zweckmäßigerweise ein von einem Motor angetriebenes Chopperrad mit teilweise offenen und teilweise geschlossenen Sektoren vorgesehen, dessen Unterbrechungsfrequenz von einem Lichtschrankendetektor erfaßt wird. Der Mikroprozessor ist mit einem Schwingquarz verbunden und steuert bzw. regelt über eine Steuerleitung die Rotationsgeschwindigkeit des Antriebsmotors für das Chopperrad, die ihm in Form der Unterbrechungsfrequenz des Choppers über eine Meßleitung von der Lichtschranke gemeldet wird.

Anders formuliert sind also das erfindungsgem äße Verfahren und die entsprechende Vorrichtung dadurch charakteriseirt, daß keine (analoge) phasenabhä ngige Gleichrichtung des Signals vor einem A/D-Wandler stattfindet und dementsprechend kein phasenabh ängiger Gleichrichter bzw. Lock-in Verstärker an dieser Stelle vorgesehen ist, was den elektronischen Aufwand erheblich reduziert. Statt dessen wird die Funktion des Lock-in Verstärkers in digitaler Form von dem A/D-Wandler in Verbindung mit dem Mikroprozessor übernommen, der den A/D-Wandler entssprechend steuert.

Der Mikroprozessor weist einen internen oder esternen Programmierspeicher auf und kann darüberhinaus auch Datenspeicher zur Zwischenspeicherung der Meßdaten umfassen.

Über einen vorgegebenen parallelen oder seriellen Datenausgang des A/D-Wandlers gelangen die Wandlungsergebnisse zum Mikroprozessor. Der Mikroprozessor hat dabei mehrere Aufgaben zu erfüllen.
1. Von der Lichtschranke erhält der µP die Drehzahlinformation des Zerhackerrades und regelt den Antriebsmotor, so daß die Zerhackerfrequenz konstant bleibt.
2. Die Phasenlage vom Detektorsignal und Lichtschrankensignal ist nicht zwangsläufig gleich, bedingt durch die räumliche Anordnung der Komponenten. Die Phasenverschiebung wird einmalig beim Kalibrieren des Gerätes gemessen und dem Prozessor als Verzögerungszeit zwischen Lichtschrankensignal und Steuersignal des A/D-Wandlers im Speicher ahgelegt.
3. Mit den Lichtschrankensignalen und der Verzögerungszeit steuert der µP die A/D-Wandlung sowohl in der Phasenlage des Detektorsignal als auch in der Zeitdauer (eine Halbwelle).
4. Auslesen der digitalen Daten vom A/D-Wandler.
5. Betragsmäßiges Addieren der Wandlungsdaten von positiver und negativer Halbwelle.
6. Eventuell Mitteilung der so gewonnenen Meßdaten über mehrere Perioden zur Erhöhung der Auflösung.

Nachdem der Mikroprozessor den Integrationsvorgang der letzten Signalperiode im A/D-Wandler gestoppt hat, wird dieser innerhalb von wenigen Mikrosekunden für die nächste Halbwelle gestartet. Danach bleibt genügend Zeit, die Daten der letzten Wandlung aus dem Ergebnisregister des A/D-Wandlers auszulesen. Im Mikroprozessor befindet sich je ein Register für die Wandlungsergebnisse, während der die Lichtschranke durchgeschaltet ist und während der die Lichtschranke unterbrochen ist. Nach jedem Einlesen neuer Daten wird der Betrag der beiden Register gebildet und das Ergebnis weiterverarbeitet.

Vorteile dieses Verfahrens gegenüber bisher bekannten Verfahren sind unter anderem:
1. Die Signalinformation des Detektors steht nur einige Mikrosekunden, nach denen eine positive und eine negative Halbwelle gemessen wurden im Mikroprozessor zur Weiterverarbeitung zur Verfügung. Dagegen entsteht bisherigen Systemen mit analogen phasenabhä ngigen Gleichrichtern eine pulsierende Gleichspannung mit der doppelten Zerhackerfrequenz. Diese muß zur Weiterverarbeitung erst mit Tiefpaßfiltern geglattet werden, was Einschwingzeiten von vielen Signalperioden verursacht.
2. Durch die direkte Analog-Digital-Wandlung wird der zusätzliche Rauschanteil durch die Signalverarbeitung minimiert im Gegensatz zu mehreren Verstärkerstufen in der Analogtechnik.
3. Der elektronische Aufwand gegenüber herkömmlichen Systemen wird erheblich reduziert. Der sonst übliche Lock-in Verstärker kann entfallen.

Weitere Vorteile, Merkmale und Anwendungsmöglichkeiten der vorliegenden Erfindung werden deutlich aus der folgenden Beschreibung einer bevorzugten Ausführungsform und der dazugehörigen Figuren. Es zeigen:
- Figur 1: schematisch ein Meßsystem gemäß der vorliegenden Erfindung und
- Figur 2: ein Meßsystem nach dem Stand der Technik.

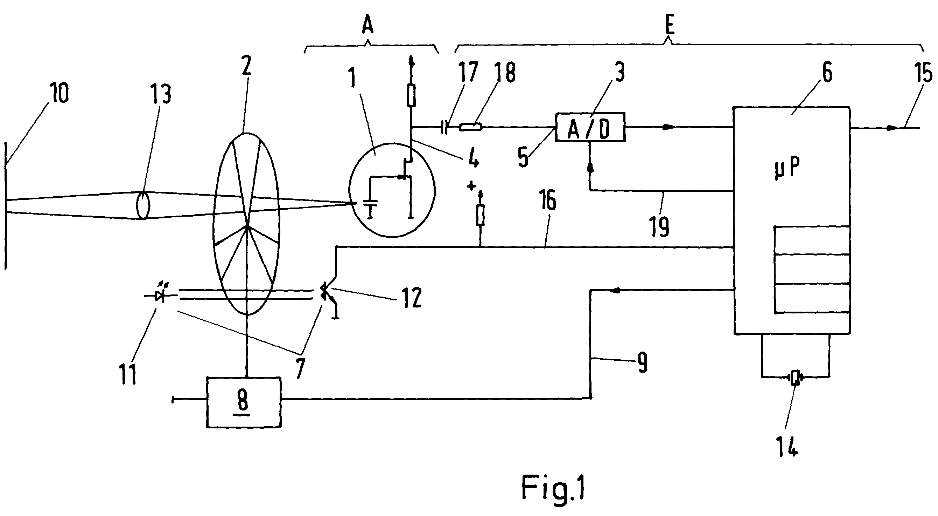

In Figur 1 ist mit 10 ein nur schematisch als Strich bzw. Oberfläche dargestelltes, Strahlung abgebendes Objekt bezeichnet, wobei die von diesem Objekt ausgehende Strahlung von einem Detektor 1 erfaßt werden soll. Dabei kann es sich zum Beispiel um Infrarotstrahlung handeln, die ein Maß für die Temperatur eines Gegenstandes 10 ist. Zwischen dem Detektor 1 und dem Objekt 10 befindet sich noch eine Optik 13, die hier lediglich in Form einer einzelnen Linse angedeutet ist und die die Meßoberfläche in geeigneter Weise auf eine entsprechende Detektorfläche fokussiert. In dem Strahlengang zwischen Meßobjekt 10 und Detektor 1 ist außerdem noch ein Chopper in Form eines Chopperrades 2 angeordnet, welches von einem Motor 8 angetrieben wird. Eine Lichtschranke 7, bestehend aus einer Leuchtdiode 11 und einer Photozelle 12, erfaßt die wechselweisen Unterbrechungen und Freigaben durch die Sektoren des Chopperrades 2 und damit auch die Unterbrechungsfrequenz für die von dem Objekt 10 auf den Detektor 1 fallende Strahlung. Dabei können allerdings die Strahlungsunterbrechungen über den Lichtschrankenunterbrechungen phasenverschoben sein, auch wenn es grundsätzlich möglich wäre, das Chopperrad so auszugestalten und die Lichtschranke 7 so anzuordnen, daß die Unterbrechungen des Strahlenganges und der Lichtschranke jeweils gleichzeitig auftreten würden. Da aber auch der Detektor 1 eine gewisse Ansprechzeit hat und auch andere Komponenten der Elektronik Verzögerungen der Signale verursachen können, ist es zweckmäßig, wenn in einer Kalibierungsmessung die Phasenverschiebung zwischen Lichtschranke und dem am Eingang 5 des A/D-Wandlers 3 auftretenden Wechselspannungssignal erfaßt und durch Steuerung der Integrationszeiten und der Umpolung des Analogeinganges 5 berücksichtigt wird.

Zweckmäßigerweise sind die Unterbrechungs- und Freigabesektoren des Chopperrades 2 jeweils gleich groß, d.h. sie sollten sich über jeweils gleiche Winkelsektoren erstrecken, damit das entstehende Wechselspannungssignal am Ausgang des Detektors 4 ein symmetrisches Signal ist und gleich große negative wie positive Halbwellen hat. Anschließend wird der Vorzeichenwechsel am Eingang 5 des A/D-Wandlers 3 exakt auf die Unterbrechungsfrequenz des Chopperrades abgestimmt und die Phasenverschiebung wird zum Beispiel dadurch ermittelt, daß man die Phase derart verschiebt, daß das durch den A/D-Wandler 3 integrierte Signal im wesentlichen verschwindet. Eine erneute Phasenverschiebung um 90° ergibt dann das maximale Signal und eine korrekte, betragsmäßige Integration der positiven und negativen Halbwellen. Alternativ kann die Phasenverschiebung aber auch durch Einstellen auf ein maximales Messignal ermittelt werden.

Die so von dem A/D-Wandler betragsmäßig integrierten Daten werden an den Mikroprozessor übergeben, gegebenenfalls in diesem zwischengespeichert und stehen schließlich am Ausgang 15 des Mikroprozessors für die Weiterverarbeitung, beispielsweise für die Steuerung einer Anlage, welche die Strahlung des Objektes 10 beeinflußt, zur Verfügung.

Neben dem Eingang 5 und dem Datenausgang zum Mikroprozessor hat der A/D-Wandler 3 außerdem noch einen Steuereingang, der über eine Steuerleitung 19 mit dem Mikroprozessor verbunden ist und über welchen Vorzeichen, Zeitpunkt und Zeitdauer der Integration des A/D-Wandlers eingestellt werden.

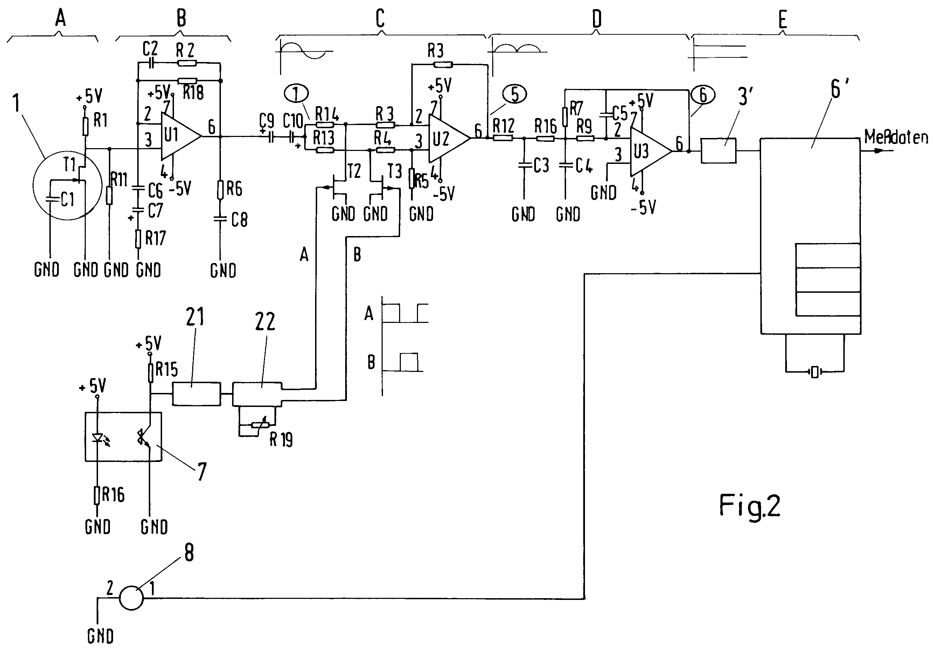

Zum Vergleich ist in Figur 2 ein herkömmliches Meßsystem dargestellt, welches unter anderem auch den Detektor 1, einen A/D-Wandler 3' und einen Mikroprozessor 6' enthält. Lediglich das Objekt 10 und die Strahlenoptik 13 sind in Figur 2 nicht dargestellt. Auch Chopper, Motor 8 und Lichtschranke 7 können bei dem System nach dem Stand der Technik im wesentlichen identisch vorhanden sein. Allerdings unterscheidet sich der herkömmlich verwendete A/D-Wandler 3' von dem erfindungsgemäßen A/D-Wandler 3 vor allem dadurch, daß letzterer steuerbar ist und einen bipolaren Analogeingang besitzt, während der A/D-Wandler 3' bei dem System nach dem Stand der Technik diese Eigenschaften nicht aufweist und auch nicht aufzuweisen braucht. Man erkennt jedoch, daß dafür die Elektronik zwischen den Detektorausgang und den Eingang des A/D-Wandlers 3' relativ aufwendig ist. Im wesentlichen besteht diese Elektronik aus einer Vorverstärkerstufe, die insgesamt mit B bezeichnet ist, einer phasenempfindlichen Gleichrichtungsstufe, die mit C bezeichnet ist und einem aktiven Tiefpaßfilter, das mit D bezeichnet ist. Zu den Stufen sind jeweils auch noch die gemessenen und verarbeiteten Signalformen dargestellt, nämlich in Stufe C die Form einer Wechselspannung, in Stufe D die entsprechende pulsierende Gleichspannung und am Ende der Stufe D die geglättete Gleichspannung.

Um die phasenabhängige Gleichrichtung vornehmen zu können, muß außerdem noch der Unterbrecher über einen Pulsformer 21 und einen Phasenschieber 22 mit dem phasenabhängigen Gleichrichter verbunden werden.

Wie man durch Vergleich der Figuren 1 und 2 sieht, werden bei dem System gemäß der vorliegenden Erfindung die Stufen B, C und D allein dadurch ersetzt, daß ein entsprechend steuerbarer A/D-Wandler 3 und dessen Steuerung über einen Mikroprozessor vorgesehen wird. Auch Pulsformer und Phasenschieber können bei dem erfindungsgemäßen System vollständig entfallen bzw. sie werden durch die Mikroprozessorsteuerung des A/D-Wandlers 3 ersetzt. Die unten rechts im Mikroprozessor 6 angedeuteten Felder veranschaulichen Speicherblöcke, wie zum Beispiel einen RAM, ein EEPROM und ein OTP-ROM.

## Patentansprüche

1. Verfahren zur digitalen Erfassung der Meßdaten von Strahlungsdetektoren, bei welchem ein Strahlungsdetektor intermittierend einer Bestrahlung ausgesetzt wird und ein entsprechendes, intermittierendes, elektrisches Signal abgibt, welches einen hohen Gleichspannungsanteil enthält und stark verrauscht ist, **dadurch gekennzeichnet**, daß der von dem Detektor abgegebene Wechselspannungsanteil des Signals im wesentlichen unmittelbar oder allenfalls durch eine lineare Verstärkung modifiziert auf den Eingang eines integrierenden und durch einen Mikroprozessor gesteuerten Analog-Digital-Wandlers (A/D-Wandlers) mit bipolarem Analogeingang gegeben wird, wobei Beginn, Dauer und Vorzeichen der Signalintegration des A/D-Wandlers von dem Mikroprozessor gesteuert werden.

2. Verfahren nach Anspruch 1, dadurch gekennzeichnet, daß der Mikroprozessor mit dem die Frequenz des intermittierenden Signals bestimmenden Chopper synchronisiert wird.

3. Verfahren nach Anspruch 2, dadurch gekennzeichnet, daß der Beginn der Signalintegration gegenüber dem Chopper-Signal verzögert wird.

4. Verfahren nach Anspruch 3, dadurch gekennzeichnet, daß die Verzögerungszeit zwischen Chopper-Signal und Integrationsbeginn in einer Kalibrierungsmessung erfaßt und in den Mikroprozessor einprogrammiert wird.

5. Verfahren nach einem der Ansprüche 1 bis 4, dadurch gekennzeichnet, daß die von dem A/D-Wandler abgegebenen, digitalisierten Signale in dem Mikroprozessor zwischengespeichert und zur Weiterverarbeitung bereitgestellt werden.

6. Verfahren nach einem der Ansprüche 1 bis 5, dadurch gekennzeichnet, daß der Mikroprozessor über eine Quarzsteuerung die Chopper-Frequenz auf einen konstanten Wert einstellt.

7. Vorrichtung zum digitalen Erfassen der Meßdaten eines Strahlungsdetektors, mit einem Detektor (1), einem Chopper (2), einem A/D-Wandler (3) und einem Mikroprozessor (6), **dadurch gekennzeichnet,** daß der Detektorausgang (4) wechselspannungsmäßig direkt mit dem Eingang (5) des A/D-Wandlers (3) verbunden ist und daß der A/D-Wandler (3) ein integrierender, von dem Mikroprozessor (6) gesteuerter A/D-Wandler (3) mit einem bipolaren Analogeingang (5) ist.

8. Vorrichtung nach Anspruch 7, dadurch gekennzeichnet, daß zur Unterdrückung des Gleichspannungsanteils am Signalausgang (4) des Detektors für die direkte, wechselspannungsmäßige Verbindung zwischen dem Ausgang (4) des Detektors und dem Eingang (5) des A/D-Wandlers (3) ein Kondensator (17) und ein Widerstand (18) in Reihe mit dem Ausgang (4) des Detektors (1) und dem Eingang (5) des A/D-Wandlers (3) geschaltet sind.

9. Vorrichtung nach Anspruch 7 oder 8, dadurch gekennzeichnet, daß der A/D-Wandler (3) über eine Steuerleitung (19) mit dem Mikroprozessor (6) verbunden ist.

10. Vorrichtung nach einem der Ansprüche 7 bis 9, dadurch gekennzeichnet, daß der Ausgang des A/D-Wandler über eine Datenleitung (20) mit dem Mikroprozessor (6) verbunden ist.

11. Vorrichtung nach einem der Ansprüche 7 bis 10, dadurch gekennzeichnet, daß der Chopper (2) ein Unterbrechungselement mit einer Lichtschranke (7) aufweist, deren Ausgang über eine Leitung (16) mit dem Mikroprozessor (6) verbunden ist.

12. Vorrichtung nach einem der Ansprüche 7 bis 11, dadurch gekennzeichnet, daß der Chopper ein Chopperrad mit einem Antriebsmotor (8) aufweist, dessen Antriebsgeschwindigkeit über eine Steuerleitung (9) von dem Mikroprozessor (6) gesteuert wird.

13. Vorrichtung nach einem der Ansprüche 7 bis 12, dadurch gekennzeichnet, daß der Mikroprozessor (6) mit einem Schwingquarz (14) verknüpft ist, um die Motorfrequenz auf der Basis der Quarzfrequenz konstant zu halten.
